# EUROPEAN PATENT APPLICATION

(11) **EP 3 260 318 A1**
(43) Date of publication of application: **27.12.2017**
(21) Application number: 16465515.1
(22) Date of filing: 24.06.2016
(51) Int. Cl.: B60G 17/019

(54) **RIDE LEVEL CONTROL FOR A MOTOR VEHICLE**

(71) Applicant: Continental Automotive GmbH, 30165 Hannover (DE)
(72) Inventor: Ricoiu, Maria, 210102 Targu Jiu (RO); Dulf, Andrei, 307285 Mosnita Noua (RO)

(57) **Abstract**

The invention relates to a method for detecting the movement of a vehicle body of a motor vehicle having a vehicle body and a chassis which is connected to the vehicle body, wherein the chassis can move relative to the vehicle body and is connected to the vehicle body by at least one controllable spring element and/or damping element, wherein the motor vehicle has a transmission unit (1) which is designed to emit a light signal (2) and to receive the reflection of the light signal (2), and further has a reflection element (3) which is designed to reflect the light signal (2) which is emitted by the transmission unit (1), wherein the transmission unit (1) triggers a time measurement when the light signal (2) is emitted, said time measurement being terminated by virtue of the reflected light signal (2) being received, wherein the distance which is covered by the light signal (2) is ascertained from the signal propagation time of the light signal (2) which is ascertained in such a way. The invention also relates to a motor vehicle comprising an apparatus for carrying out the method according to the invention.

## Description

### Technical field

The invention relates to a method for detecting the movement of a vehicle body of a motor vehicle having a vehicle body and a chassis which is connected to the vehicle body, wherein the chassis can move relative to the vehicle body and is connected to the vehicle body by at least one controllable spring element and/or damping element. The invention also relates to a motor vehicle for applying the method according to the invention.

### Prior art

In order to increase the driving comfort in motor vehicles, chassis which permit ride level control are used. As a result, it is possible, for example, to change the floor level of the motor vehicle when it is stationary or during driving. Air springs are often used for this purpose, wherein both the stiffness of the spring and therefore the damping behavior of the air spring and also the floor level of the vehicle can be adjusted by adjusting the pressure in the interior of the air spring.

During driving, it is possible, in particular, to increase the driving comfort by regulating the pressure by virtue of the stiffness and the damping of the air spring being matched to the road surface and the respective driving situation.

A plurality of apparatuses and methods which allow the suspension properties of a motor vehicle during driving to be adjusted are known from the prior art. By way of example, camera-based systems are known which identify the carriageway located in front of the vehicle and, with the aid of further measurement values, prespecify a suitable control strategy for the suspension. Apparatuses which detect the floor level of the vehicle and therefore the height of the vehicle body above the ground at regular intervals are also known. To this end, it is possible, for example, for mechanical systems by means of which a change can be detected to be provided.

One disadvantage of the apparatuses and methods known from the prior art is, in particular, that it is not possible to influence the suspension continuously and in real time using simple means which are substantially free of wear.

### Summary of the invention, object, solution and advantages

The object of the present invention is therefore to provide a method which permits simple and continuous detection of the movement of the vehicle body in real time. A further object of the present invention is to provide a motor vehicle for applying the method.

The object in respect of the method is achieved by a method having the features of claim 1.

One exemplary embodiment of the invention relates to a method for detecting the movement of a vehicle body of a motor vehicle having a vehicle body and a chassis which is connected to the vehicle body, wherein the chassis can move relative to the vehicle body and is connected to the vehicle body by at least one controllable spring element and/or damping element, wherein the motor vehicle has a transmission unit which is designed to emit a light signal and to receive the reflection of the light signal, and further has a reflection element which is designed to reflect the light signal which is emitted by the transmission unit, wherein the transmission unit triggers a time measurement when the light signal is emitted, said time measurement being terminated by virtue of the reflected light signal being received, wherein the distance which is covered by the light signal is ascertained from the signal propagation time of the light signal which is ascertained in such a way.

However, the vehicle body is typically not necessarily formed by the bodywork of the vehicle. The chassis describes, in summary, the components such as transverse links, axles or drive shafts for example. The chassis serves to receive a wheel by means of which the motor vehicle is in contact with the ground. The chassis is firstly connected to the vehicle body and secondly can be moved at least partially relative to the vehicle body. A typical relative movement is, for example, inward and outward deflection of a wheel as a result of an unevenness on the ground or due to a force which acts on the vehicle body. Bearings and joints which allow a relative movement of the chassis in relation to the vehicle body are provided for this purpose.

An important item of information here is the position of the vehicle body relative to a defined point of the chassis or of the wheel. With knowledge of this information, it is possible, for example, to influence the suspension and/or the damping which acts between the moving part of the chassis and the vehicle body in order to improve the driving comfort or the driving safety in this way.

The method according to the invention is particularly advantageous in order to allow measurement of the distance of a defined fixing point between the moving part of the chassis and the vehicle body without wear. The transmission unit can be formed by a light-emitting diode or a similar element, such as a laser for example. It is possible to ascertain the distance between the transmission unit and the reflection surface in a simple and precise manner by emitting a light pulse and measuring the time until the reflection of the light pulse arrives back at the transmission unit. In this way, it is possible to ascertain the position of the vehicle body relative to the moving part of the chassis in a very accurate manner. Furthermore, the transmission unit preferably has a reception means which allows the reflected light signal to be received. The reception means can be integrated in the transmission unit or can be arranged on said transmission unit.

It is particularly advantageous when the distance D which is covered by the light signal is ascertained in accordance with the formula D = c * T/2, where c corresponds to the speed of light and T corresponds to the measured signal propagation time. A formulaic relationship of this kind is advantageous since it includes the signal propagation time and the propagation rate of the light signal. Dividing the result by the factor 2 means that the light signal has to cover the distance between the transmission unit and the reflection element twice until the respective measurement is stopped.

It is also advantageous when the distance is calculated in real time and continuously. Calculation in real time is possible since the fundamental mathematical relationship is very simple and therefore does not require complicated calculation methods. By virtue of ascertaining the body movement in real time, it is possible to adjust the suspension and/or the damping in a particularly rapid manner, as a result of which unevennesses and other interfering influences can be particularly well compensated.

A preferred exemplary embodiment is characterized in that a control signal which acts on the controllable spring element and/or damping element is generated by the transmission unit depending on the ascertained distance, as a result of which a change in the distance is produced in the event of a subsequent measurement.

This is advantageous in order to react appropriately to the ascertained distance between the vehicle body and the chassis. In comparison to a known base value which is measured, for example, when the vehicle is stationary, in particular before driving is started, an exact statement can be made about the position of the chassis relative to the vehicle body and a corresponding correction of the suspension properties and/or of the damping can be performed. Ascertaining a base value is expedient in particular at a time at which the motor vehicle is at a standstill but has already been fully loaded for the imminent journey. This is advantageous in order to be able to realize control which is matched to the respective loading of the motor vehicle since the floor level of the vehicle body changes with the loading state.

It is also preferred when the spring element is formed by an air spring, wherein the internal pressure in the air spring is adjusted depending on the control signal which is generated by the transmission unit. An air spring which is often used today provides the advantage that both the damping and the spring stiffness can be adjusted solely by correcting the internal pressure.

Furthermore, it is advantageous when the light signal is formed by a light pulse. A light pulse is distinguished, in particular, by a predefined duration which can be very short. As a result, a large number of measurement operations can be carried out at short intervals, in order to allow the movement of the chassis relative to the body to be detected in a particularly accurate manner.

It is further advantageous when the motor vehicle has a plurality of wheels, wherein each of the wheels is connected to the vehicle body by means of a chassis and a controllable spring element and/or damping element, wherein the movement in relation to the vehicle body can be ascertained for each of the wheels. This is advantageous in order to allow detection in as accurate a manner as possible and to be able to carry out compensation in respect of the wheels. Therefore, the driving comfort can be increased further. Therefore, it is particularly advantageously possible to not only influence the relative movement of a wheel or chassis in relation to the vehicle body but also to influence the entire movement of the vehicle body in dynamic driving situations. Therefore, it is possible, for example, to reduce pitching or rolling of the vehicle body. Furthermore, the floor level of the vehicle body can be influenced in this way by prespecifying a prespecification value.

It is also expedient when common control signals for the controllable spring elements and/or damping elements are generated for in each case two wheels which are associated with one axle, or when common control signals for the respective controllable spring elements and/or damping elements are generated for in each case two wheels which are associated with a common vehicle side, or when common control signals for the respective controllable spring elements and/or damping elements are generated for in each case two wheels which are situated diagonally opposite one another.

This is particularly advantageous in order to reduce dynamic driving movements of the vehicle body in a targeted manner, said movements being produced, for example, when driving around a bend or when driving over obstacles which are situated transverse to the driving direction.

The object in respect of the motor vehicle is achieved by a motor vehicle having the features of claim 9.

One exemplary embodiment of the invention relates to a motor vehicle, wherein the transmission unit is arranged on the vehicle body and the reflection element is arranged on the chassis which can move relative to the vehicle body.

An arrangement of this kind is advantageous in order to detect the relative movement in a simple and quick manner. It is preferred to arrange only the reflection element on the chassis since, in the simplest case, said reflection element can be formed by a reflective surface and therefore only little additional weight or no additional weight at all is produced on the chassis. This is advantageous since the unsprung mass of the chassis should be kept as low as possible for reasons of driving dynamics and in order to improve comfort.

It is further expedient when the motor vehicle has a plurality of wheels which are connected to the vehicle body by means of a chassis, wherein a transmission unit and a reflection element are arranged on the motor vehicle for each of the wheels. This arrangement is advantageous since it allows the relative movements of all of the wheels to be ascertained and taken into account individually, as a result of which improved actuation of the spring elements and/or damper elements can be achieved in particular.

It is also advantageous when an arithmetic unit is arranged on the motor vehicle, said arithmetic unit being designed to compare the distances between the body and the chassis with one another, said distances being ascertained by a transmission unit or by a plurality of transmission units, and to transmit individual control signals to the respective controllable spring elements and/or damping elements of the individual wheels. An arithmetic unit of this kind allows the relative movements of the individual wheels to be put into context in relation to one another and conclusions to be drawn about the overall movement of the motor vehicle from this.

Advantageous developments of the present invention are described in the dependent claims and in the following description of figures.

### Brief description of the drawings

The invention will be explained in detail below on the basis of an exemplary embodiment with reference to the drawings, in which:
- figure 1: shows a schematic view of a structure for ascertaining the distance between a transmission unit and a reflection element, and
- figure 2: shows a block diagram which illustrates the method according to the invention.

### Preferred embodiment of the invention

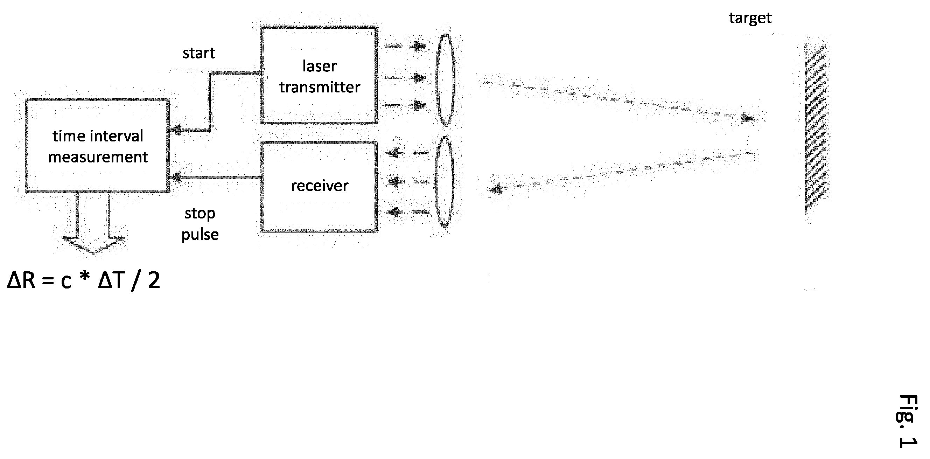

Figure 1 shows a transmission unit 1 which is formed, for example, by a laser diode or another light source. The transmission unit 1 sends a light signal 2 in the direction of a target. In an apparatus according to the invention, the target is formed by the reflection element 3 which is arranged on the chassis of the motor vehicle. The transmission unit 1 is preferably arranged on the vehicle body.

The light signal 2 can be focused by additional optical means 4, for example a converging lens, or can be deflected in a desired direction.

The light signal is reflected at the surface of the target or of the reflection element 3 and returned in the direction of the transmission unit 1. The transmission unit 1 contains a reception means 5 which can be designed as an integral constituent part of the transmission unit 1 or can be arranged adjacent to said transmission unit. The transmission unit 1 and the reception means 5 are advantageously arranged at the same distance from the reflection element. If the distances differ, this has to be taken into account by including a suitable correction factor in the formula reference 8 for ascertaining the distance.

An optical means 6 for focusing and/or for deflecting the light signal 2 can also be arranged in front of the reception means 5.

A start pulse is output to an arithmetic unit 7 by virtue of the light signal 2 being emitted. A stop pulse is output to the arithmetic unit 7 by virtue of the light signal 2 being received at the reception means 5. Therefore, it is possible to detect the time which is required for the light signal 2 to cover the distance between the transmission unit 1 and the reflection element 3 and from the reflection element 3 to the reception means 5. It is thereby possible to ascertain the distance between the transmission unit 1 and the reflection element 3 in a simple manner using the formula reference identified by reference symbol 8.

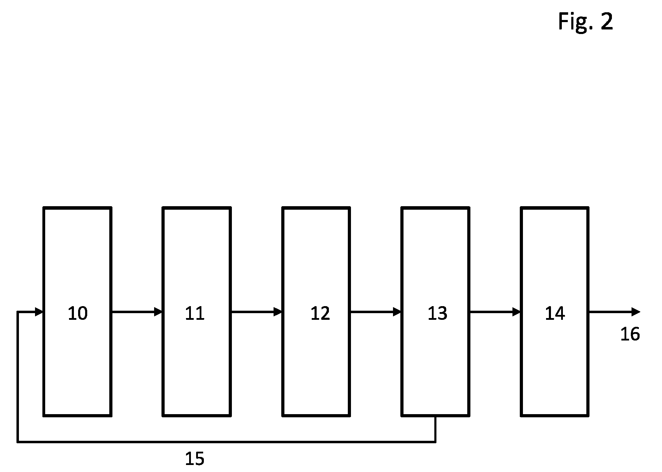

Figure 2 shows a block diagram for illustrating the method according to the invention. In block 10, the light signal is emitted by the transmission unit. A start pulse is output to the arithmetic unit at the same time.

Block 11 represents the reflection at the reflection element. In block 12, the light signal is received at the reception means and a stop pulse is output to the arithmetic unit at the same time. In block 13, the distance between the transmission unit and the reflection element is ascertained in the arithmetic unit in real time. Block 14 represents the output of one or more control signals 16 to the spring elements and/or the dampers of the motor vehicle.

The arrow 15, which leads from block 13 back to block 10, illustrates that the method is continuously repeated in a loop.

The exemplary embodiments of figures 1 and 2 are, in particular, not limiting and serve to explain the concept of the invention.

## Claims

1. A method for detecting the movement of a vehicle body of a motor vehicle having a vehicle body and a chassis which is connected to the vehicle body, wherein the chassis can move relative to the vehicle body and is connected to the vehicle body by at least one controllable spring element and/or damping element, **characterized in that** the motor vehicle has a transmission unit (1) which is designed to emit a light signal (2) and to receive the reflection of the light signal (2), and further has a reflection element (3) which is designed to reflect the light signal (2) which is emitted by the transmission unit (1), wherein the transmission unit (1) triggers a time measurement when the light signal (2) is emitted, said time measurement being terminated by virtue of the reflected light signal (2) being received, wherein the distance which is covered by the light signal (2) is ascertained from the signal propagation time of the light signal (2) which is ascertained in such a way.

2. The method as claimed in claim 1, **characterized in that** the distance D which is covered by the light signal (2) is ascertained in accordance with the formula D = c * T/2, where c corresponds to the speed of light and T corresponds to the measured signal propagation time.

3. The method as claimed in either of the preceding claims, **characterized in that** the distance is calculated in real time and continuously.

4. The method as claimed in one of the preceding claims, **characterized in that** a control signal (16) which acts on the controllable spring element and/or damping element is generated by the transmission unit (1) depending on the ascertained distance, as a result of which a change in the distance is produced in the event of a subsequent measurement.

5. The method as claimed in one of the preceding claims, **characterized in that** the spring element is formed by an air spring, wherein the internal pressure in the air spring is adjusted depending on the control signal (16) which is generated by the transmission unit (1).

6. The method as claimed in one of the preceding claims, **characterized in that** the light signal (2) is formed by a light pulse.

7. The method as claimed in one of the preceding claims, **characterized in that** the motor vehicle has a plurality of wheels, wherein each of the wheels is connected to the vehicle body by means of a chassis and a controllable spring element and/or damping element, wherein the movement in relation to the vehicle body can be ascertained for each of the wheels.

8. The method as claimed in claim 7, **characterized in that** common control signals (16) for the controllable spring elements and/or damping elements are generated for in each case two wheels which are associated with one axle, or **in that** common control signals (16) for the respective controllable spring elements and/or damping elements are generated for in each case two wheels which are associated with a common vehicle side, or **in that** common control signals (16) for the respective controllable spring elements and/or damping elements are generated for in each case two wheels which are situated diagonally opposite one another.

9. A motor vehicle for applying the method as claimed in one of the preceding claims, **characterized in that** the transmission unit (1) is arranged on the vehicle body and the reflection element (3) is arranged on the chassis which can move relative to the vehicle body.

10. The motor vehicle as claimed in claim 9, **characterized in that** the motor vehicle has a plurality of wheels which are connected to the vehicle body by means of a chassis, wherein a transmission unit (1) and a reflection element (3) are arranged on the motor vehicle for each of the wheels.

11. The motor vehicle as claimed in either of the preceding claims 9 and 10, **characterized in that** an arithmetic unit (7) is arranged on the motor vehicle, said arithmetic unit being designed to compare the distances between the body and the chassis with one another, said distances being ascertained by a transmission unit (1) or by a plurality of transmission units (1), and to transmit individual control signals (16) to the respective controllable spring elements and/or damping elements of the individual wheels.
